# EUROPEAN PATENT APPLICATION

(11) **EP 4 117 080 A1**
(43) Date of publication of application: **11.01.2023**
(21) Application number: 21764980.5
(22) Date of filing: 28.01.2021
(51) Int. Cl.: H01M 10/42, H01M 50/20, B60L 53/53

(54) **BATTERY PACK AND VEHICLE**

(30) Priority: 04.03.2020 CN 202020255112 U
(71) Applicant: BYD Company Limited, Shenzhen, Guangdong 518118 (CN)
(72) Inventor: WANG, Yi, Shenzhen, Guangdong 518118 (CN); PENG, Qingbo, Shenzhen, Guangdong 518118 (CN); CHEN, Danfeng, Shenzhen, Guangdong 518118 (CN); TAO, Naishu, Shenzhen, Guangdong 518118 (CN); ZHU, Yan, Shenzhen, Guangdong 518118 (CN)
(74) Representative: DehnsGermany Partnerschaft von Patentanwälten
(86) International application number: PCT/CN2021/074130
(87) International publication number: WO 2021/175051

(57) **Abstract**

A battery pack (100) and a vehicle including the battery pack (100) are provided. The battery pack (100) includes a housing, a battery core group (20), and a distribution box (30) detachably mounted on the housing. The housing is provided with a receiving space (101). Both the battery core group (20) and the distribution box (30) are received in the receiving space (101). The battery core group (20) is electrically connected to the distribution box (30). The housing includes a bottom plate (11) and an access cover (12). The bottom plate (11) is provided with an access port (110). The access port (110) communicates with the receiving space (101). The distribution box (30) faces the access port (110). The access cover (12) is detachably mounted on the bottom plate (11) and covers the access port (110).

## Description

### CROSS-REFERENCE TO RELATED APPLICATIONS

This application claims priority to Chinese Patent Application No. "202020255112.2" filed by the BYD Co., Ltd. on March 4, 2020 and entitled "BATTERY PACK AND VEHICLE".

### FIELD

The present disclosure relates to the field of vehicle technologies, and more specifically, to a battery pack and a vehicle.

### BACKGROUND

With the popularity of new energy vehicles, more and more electric vehicles have come to people's attention. A power battery pack in an electric vehicle generally includes a housing and a high-voltage distribution box mounted inside the housing. Various components are arranged in the high-voltage distribution box, which are used for power generation, power transmission, power distribution or power conversion of the power battery pack.

In conventional technology, the high-voltage distribution box is arranged in the housing. When the high-voltage distribution box in the power battery pack is to be maintained, maintenance personnel need to detach the power battery pack as a whole from the electric vehicle before a maintenance operation can be performed on the high-voltage distribution box, resulting in a complex and time-consuming process of maintaining the high-voltage distribution box.

### SUMMARY

Based on the above-mentioned problem of a complex process of maintaining a distribution box, the present disclosure provides a battery pack. An access port for maintaining the distribution box is provided on a bottom plate of the battery pack to avoid detaching the whole battery pack when maintaining the distribution box, thereby simplifying the process of maintaining the distribution box.

The present disclosure further provides a vehicle.

According to a first aspect, the present disclosure provides a battery pack. The battery pack includes a housing, a battery core group, and a distribution box detachably mounted on the housing. The housing is provided with a receiving space. Both the battery core group and the distribution box are received in the receiving space. The battery core group is electrically connected to the distribution box. The housing includes a bottom plate and an access cover. The bottom plate is provided with an access port. The access port communicates with the receiving space. The distribution box faces the access port. The access cover is detachably mounted on the bottom plate and covers the access port.

In some examples of the present disclosure, the housing further includes an upper cover plate and a side frame. The upper cover plate is arranged opposite to the bottom plate. The side frame is connected between the upper cover plate and the bottom plate. The bottom plate, the access cover, the side frame, and the upper cover plate jointly define the sealed receiving space.

In some examples of the present disclosure, the battery core group is mounted on the bottom plate, and is staggered with the access port.

In some examples of the present disclosure, the housing further includes a retainer plate. The distribution box is detachably mounted on the retainer plate. The retainer plate is mounted on the side frame or the bottom plate. At least part of the retainer plate is arranged between the battery core group and the distribution box.

In some examples of the present disclosure, the retainer plate further includes a first retainer plate and a second retainer plate connected to the first retainer plate. The first retainer plate is arranged between the battery core group and the distribution box. The second retainer plate is arranged between the distribution box and the upper cover plate.

In some examples of the present disclosure, the bottom plate includes a first side and a second side arranged opposite to each other. The access port is closer to the second side than the first side. The first retainer plate is closer to the second side than the first side.

In some examples of the present disclosure, the retainer plate and the bottom plate are both made of an insulating material. The side frame is made of a metal material.

In some examples of the present disclosure, a side of the upper cover plate away from the bottom plate is provided with a convex edge. The convex edge protrudes from a side of a surface of the upper cover plate away from the bottom plate.

In some examples of the present disclosure, the distribution box includes multiple components. The multiple components are all detachably mounted in the housing. The multiple components are exposed relative to the access port.

According to a second aspect, the present disclosure further provides a vehicle. The vehicle includes a vehicle body and the battery pack as described above. The battery pack is mounted on the vehicle body. The access cover is exposed relative to the vehicle body.

In an embodiment of the present disclosure, in an embodiment of the present disclosure, the access port is provided in the bottom plate, so that when maintenance personnel maintain the distribution box, it is only necessary to detach the access cover from the bottom plate to expose the distribution box, so that a maintenance operation can be performed on the distribution box, thereby simplifying the process of maintaining the distribution box in the battery pack and reducing a maintenance time.

Additional aspects and advantages of the present disclosure will be set forth, in part, from the following description, and in part will become apparent from the following description, or may be learned by practice of the present disclosure.

### BRIEF DESCRIPTION OF THE DRAWINGS

FIG. 1 is a schematic structural diagram of a battery pack according to an embodiment of the present disclosure;
FIG. 2 is a schematic structural exploded view of the battery pack shown in FIG. 1;
FIG. 3 is a partial schematic structural exploded view of the battery pack shown in FIG. 1;
FIG. 4 is a schematic structural diagram of the structure shown in FIG. 3 from another angle; and
FIG. 5 is a partial schematic diagram of a battery core group shown in FIG. 1.

### DETAILED DESCRIPTION

Technical solutions in the implementations of the present disclosure will be described below with reference to the accompanying drawings in the implementations of the present disclosure. Obviously, the described implementations are only a part of the implementations of the present disclosure, rather than all of the implementations. In the case of no conflict, the implementations of the present disclosure and the features in the implementations may be combined with each other. All other implementations obtained by a person of ordinary skill in the art based on the implementations of the present disclosure without making creative efforts shall fall within the protection scope of the present disclosure.

An embodiment of the present disclosure provides a vehicle. The vehicle includes a vehicle body and a battery pack 100. The battery pack 100 is mounted on the vehicle body. The battery pack 100 can supply energy to the vehicle. The vehicle may be a battery electric vehicle or a hybrid electric vehicle. The battery pack 100 may be, but not limited to, a lithium battery.

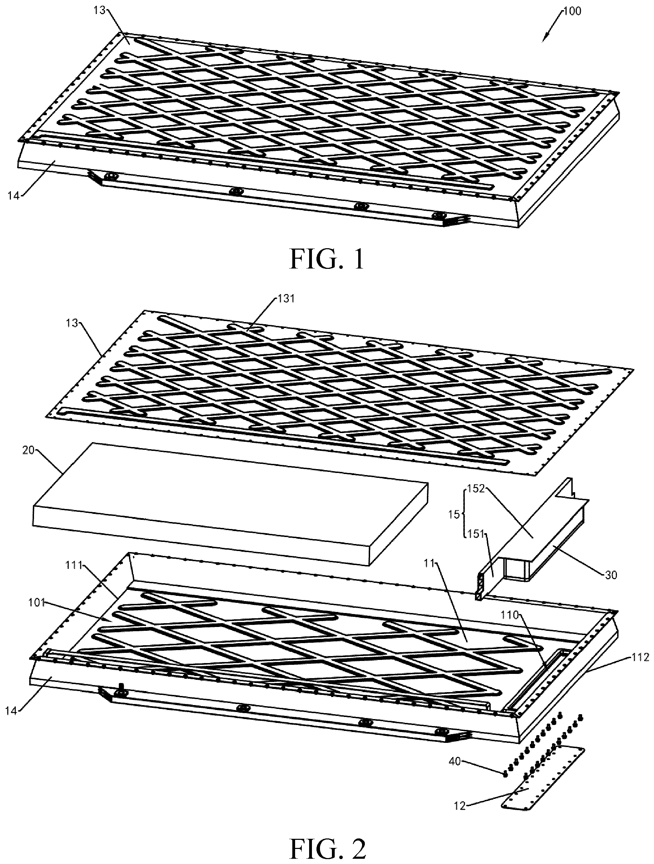

FIG. 1 is a schematic structural diagram of the battery pack 100 according to an embodiment of the present disclosure. FIG. 2 is a schematic structural exploded view of the battery pack 100 shown in FIG. 1. The battery pack 100 includes a housing, a battery core group 20, and a distribution box 30 detachably mounted on the housing. The battery core group 20 is electrically connected to the distribution box 30. The distribution box 30 may be, but not limited to, a high-voltage distribution box 30. The distribution box 30 includes multiple components. The multiple components may be components such as a distribution box , a battery disconnect unit (BDU), a battery management system (BMS), a manual service disconnect (MSD) and a relay, and are used to control functions such as power generation, power transmission, power distribution, and power conversion of the battery core group 20.

The housing is provided with a receiving space 101. The battery core group 20 and the distribution box 30 are both received in the receiving space 101. That is, the distribution box 30 and the battery core group 20 are integrated in the housing. The distribution box 30 includes various components to integrate the distribution box 30 and the battery core group 20 in the housing, so that a potential safety hazard caused by the external placement of the distribution box 30 is avoided, and a risk of electric leakage of the distribution box 30 is reduced. In addition, the distribution box 30 is arranged in the housing, so that the utilization of placement space can be improved, thereby improving the space utilization of the vehicle.

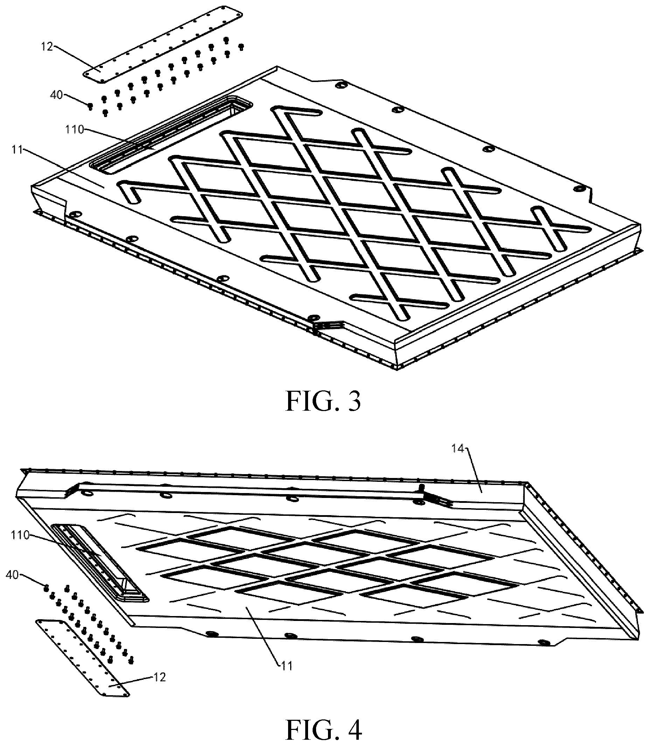

Still referring to FIG. 2 and FIG. 3, FIG. 3 is a partial schematic structural exploded view of the battery pack 100 shown in FIG. 1. The housing includes a bottom plate 11 and an access cover 12. The bottom plate 11 is used to support the battery core group 20. It may be understood that the battery core group 20 is mounted on the bottom plate 11. The bottom plate 11 is provided with an access port 110. The access port 110 communicates with the receiving space 101. The access cover 12 is detachably mounted on the bottom plate 11 and covers the access port 110. The distribution box 30 faces the access port 110. It may be understood that when the access cover 12 is detached from the bottom plate 11, the distribution box 30 is exposed relative to the access port 110.

In an embodiment of the present disclosure, the access port 110 is provided in the bottom plate 11, so that when maintenance personnel maintain the distribution box 30, it is only necessary to detach the access cover 12 from the bottom plate 11 to expose the distribution box 30, so that a maintenance operation can be performed on the distribution box 30, thereby simplifying the process of maintaining the distribution box 30 in the battery pack 100 and reducing a maintenance time.

The detachable connection manner of the access cover 12 and the bottom plate 11 may be, but not limited to, any one of a threaded connection, a snap connection or a hinge connection.

As shown in FIG. 3, the battery pack 100 includes a fastener 40. The fastener 40 is used to mount the access cover 12 on the bottom plate 11. In an embodiment of the present disclosure, the description is provided by using an example in which the fastener 40 is a screw. When maintaining the distribution box 30, the maintenance personnel only need to detach the fastener 40 to detach the access cover 12, making the step of detaching the access cover 12 easy and convenient.

In an implementation, the multiple components are all detachably mounted in the housing. The multiple components are exposed relative to the access port 110.

In an embodiment of the present disclosure, the multiple components in the distribution box 30 are exposed relative to the access port 110, and are all detachably mounted on the housing, so that during maintenance of the distribution box 30, it is only necessary to detach a component that needs to be replaced to implement the maintenance of the distribution box 30, to avoid the replacement of the entire distribution box 30, thereby saving resources.

Referring to FIG. 2 and FIG. 4, FIG. 4 is a schematic structural diagram of the structure shown in FIG. 3 from another angle. The housing further includes an upper cover plate 13 and a side frame 14. The upper cover plate 13 and the bottom plate 11 are arranged opposite to each other. The side frame 14 is connected between the upper cover plate 13 and the bottom plate 11. The bottom plate 11, the access cover 12, the side frame 14, and the upper cover plate 13 jointly define the sealed receiving space 101. The side frame 14 and the bottom plate 11 may be fixed by gluing or bolting. It is more reliable that the side frame 14 and the bottom plate 11 are fixed by bolting.

In an embodiment of the present disclosure, the battery core group 20 and the distribution box 30 are arranged in the receiving space 101, so that the housing can provide dustproofing and waterproofing, thereby effectively protecting the battery core group 20 and the distribution box 30 and extending the service life of the battery core group 20 and the distribution box 30.

The battery pack 100 is usually mounted under the vehicle. When the battery pack 100 is mounted on the vehicle body, the upper cover plate 13 is mounted on the vehicle body, and the bottom plate 11 faces the bottom surface downward, so that the upper cover plate 13 is not visible relative to the vehicle body, and the bottom plate 11 is visible relative to the vehicle body. That is, when the battery pack 100 is mounted on the vehicle body, the access cover 12 is exposed relative to the vehicle body.

If the access port 110 is opened in the upper cover plate 13, when the maintenance personnel maintain the distribution box 30, the battery pack 100 still needs to be detached from the vehicle body as a whole before the maintenance operation can be performed on the distribution box 30. The maintenance process is still complex and time-consuming. In an embodiment of the present disclosure, the access port 110 is provided in the bottom plate 11 visible relative to the vehicle body, so that when the maintenance personnel maintain the distribution box 30 mounted in the battery pack 100 of the vehicle body, there is no need to detach the battery pack 100 from the vehicle body as a whole and then detach the housing, and it is only necessary to detach the access cover 12 from the bottom of the vehicle body to maintain the distribution box 30, thereby simplifying a maintenance process and reducing a maintenance time.

In an implementation, the battery core group 20 is mounted on the bottom plate 11, and is staggered with the access port 110. That is, the battery core group 20 is not exposed relative to the access port 110.

In an embodiment of the present disclosure, when the maintenance personnel detach the access cover 12 to maintain the distribution box 30, the access port 110 only exposes the distribution box 30, which prevents the battery core group 20 from being exposed relative to the access port 110 to affect the battery core group 20.

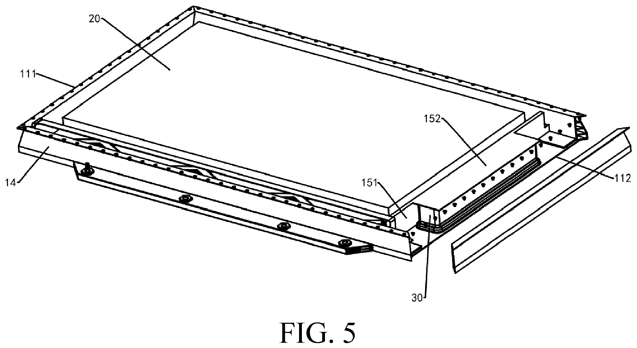

Further, still referring to FIG. 2 and FIG. 5, FIG. 5 is a partial schematic diagram of the battery core group 20 shown in FIG. 1. The housing further includes a retainer plate 15. The distribution box 30 is detachably mounted on the retainer plate 15. The retainer plate 15 is mounted on the side frame 14 or the bottom plate 11. At least part of the retainer plate 15 is arranged between the battery core group 20 and the distribution box 30.

The distribution box 30 may be fixed to the side frame 14 or the bottom plate 11 by means of bolting, riveting or gluing. In a process of assembling the battery pack 100, the distribution box 30 is detachably mounted on the retainer plate 15, and then the retainer plate 15 is mounted on the side frame 14 or the bottom plate 11, thereby fixing the position of the distribution box 30 relative to the housing.

Still referring to FIG. 5, the retainer plate 15 includes a first retainer plate 151 and a second retainer plate 152 connected to the first retainer plate 151. The first retainer plate 151 is arranged between the battery core group 20 and the distribution box 30. The second retainer plate 152 is arranged between the distribution box 30 and the upper cover plate 13. It may be understood that the retainer plate 15 is configured with an "L" shape. The first retainer plate 151 is used for being mounted on the side frame 14 or the bottom plate 11 and used for separating the battery core group 20 and the distribution box 30. The second retainer plate 152 is further used to mount the distribution box 30.

In an embodiment of the present disclosure, the first retainer plate 151 is spaced between the distribution box 30 and the battery core group 20 to avoid mutual interference of signals between the battery core group 20 and the distribution box 30, thereby ensuring the reliability of the battery pack 100.

In an implementation, the retainer plate 15 and the bottom plate 11 are both made of an insulating material. The side frame 14 is made of a metal material.

It may be understood that the first retainer plate 151, the second retainer plate 152 and the access cover 12 around the distribution box 30 are both made of an insulating material. The side frame 14 is made of hard metal, thereby preventing a collision and protecting the internal battery core group 20 and the distribution box 30. In an embodiment of the present disclosure, components made of an insulating material are arranged around the distribution box 30, thereby insulating and protecting the distribution box 30.

In an implementation, a side of the upper cover plate 13 away from the bottom plate 11 is provided with a convex edge 131. The convex edge 131 protrudes from a side of a surface of the upper cover plate 13 away from the bottom plate 11.

In an embodiment of the present disclosure, the upper cover plate 13 is provided with the convex edge 131 protruding from the surface of the upper cover plate 13, so that the capacity of the receiving space 101 is increased and the upper cover plate 13 is more elastic, thereby protecting the battery core group 20.

Further, still referring to FIG. 5, the bottom plate 11 includes a first side 111 and a second side 112 arranged opposite to each other. The access port 110 is closer to the second side 112 than the first side 111. The first retainer plate 151 is closer to the second side 112 than the first side 111. It may be understood that the access port 110 is arranged at an edge of the bottom plate 11 and close to one side of the side frame 14. That is, the distribution box 30 is arranged at an edge of the bottom plate 11 and close to one side of the side frame 14.

In an embodiment of the present disclosure, the access port 110 is arranged at an edge of the bottom plate 11, that is, the distribution box 30 is arranged at an edge of the bottom plate 11, which does not affect the internal structure and overall arrangement of the battery pack 100.

The implementations of the present disclosure are introduced in detail above, and specific examples are used to illustrate the principles and implementations of the present disclosure. The descriptions of the above implementations are only used to help understand the methods and core ideas of the present disclosure; and for persons of ordinary skill in the art, based on the idea of the present disclosure, there may be changes in the specific implementation and application scope. In conclusion, the contents of this specification should not be construed as a limitation on the present disclosure.

## Claims

1. A battery pack, comprising: a housing, a battery core group, and a distribution box detachably mounted on the housing, wherein the housing is provided with a receiving space, both the battery core group and the distribution box are received in the receiving space, and the battery core group is electrically connected to the distribution box;
the housing comprises a bottom plate and an access cover, the bottom plate is provided with an access port, the access port communicates with the receiving space, the distribution box faces the access port, and the access cover is detachably mounted on the bottom plate and covers the access port.

2. The battery pack according to claim 1, wherein the housing further comprises an upper cover plate and a side frame, the upper cover plate is arranged opposite to the bottom plate, the side frame is connected between the upper cover plate and the bottom plate, and the bottom plate, the access cover, the side frame and the upper cover plate jointly define the sealed receiving space.

3. The battery pack according to claim 2, wherein the battery core group is mounted on the bottom plate, and is staggered with the access port.

4. The battery pack according to claim 3, wherein the housing further comprises a retainer plate, the distribution box is detachably mounted on the retainer plate, the retainer plate is mounted on the side frame or the bottom plate, and at least part of the retainer plate is arranged between the battery core group and the distribution box.

5. The battery pack according to claim 4, wherein the retainer plate comprises a first retainer plate and a second retainer plate connected with the first retainer plate, the first retainer plate is arranged between the battery core group and the distribution box, and the second retainer plate is arranged between the distribution box and the upper cover plate.

6. The battery pack according to claim 5, wherein the bottom plate comprises a first side and a second side arranged opposite to each other, the access port is arranged closer to the second side than the first side, and the first retainer plate is arranged closer to the second side than the first side.

7. The battery pack according to claim 4, wherein the retainer plate and the bottom plate are both made of an insulating material, and the side frame is made of a metal material.

8. The battery pack according to claim 2, wherein a side of the upper cover plate away from the bottom plate is provided with a convex edge, and the convex edge protrudes from a side of a surface of the upper cover plate away from the bottom plate.

9. The battery pack according to any one of claims 1 to 8, wherein the distribution box comprises a plurality of components, the plurality of components are all detachably mounted in the housing, and the plurality of components are exposed relative to the access port.

10. A vehicle, comprising: a vehicle body and the battery pack according to any one of claims 1 to 9, wherein the battery pack is mounted on the vehicle body, and the access cover is exposed relative to the vehicle body.
